# EUROPÄISCHE PATENTANMELDUNG

(11) **EP 4 796 900 A1**
(43) Veröffentlichungstag der Anmeldung: **26.08.2026**
(21) Anmeldenummer: 26158689.5
(22) Anmeldetag: 16.02.2026
(51) Int. Cl.: G01D 5/20

(54) **VERFAHREN ZUR LAGEDETEKTION IN EINEM ELEKTROMAGNETISCHEN AKTOR UND STEUERGERÄT**

(30) Priorität: 21.02.2025 DE 102025106652
(71) Anmelder: Thomas GmbH, 57562 Herdorf (DE)
(72) Erfinder: Walter, Andreas, 57583 Mörlen (DE); Setzke, Colin, 57520 Derschen (DE)

(57) **Zusammenfassung**

Die Erfindung betrifft ein Verfahren zur Lagedetektion in einem elektromagnetischen Aktor (2) mit einem Luftspalt (6), aufweisend die Schritte: Anlegen einer Spannung (S1) an einem Elektromagneten (4) des Aktors (2); Erfassen (S2) eines ersten Stromwertes (i(t1)) zu einem ersten Zeitpunkt (t1) und eines zweiten Stromwertes (i(t2)) zu einem zweiten Zeitpunkt (t2) in dem Elektromagneten (4); Ermitteln (S3), aus dem ersten Stromwert (i(t1)) und dem zweiten Stromwert (i(t2)), einer Änderung des Stromes (di/dt) über die Zeit (t); Erfassen (S4) eines dritten Stromwertes (i(t3)) zu einem dritten Zeitpunkt (t3); Ermitteln (S5) eines Widerstandes des Elektromagneten (4); Ermitteln (S6), aus der angelegten Spannung und/oder eines erfassten Spannungswertes, der Stromänderung (di/dt) und des Widerstandes, einer differentiellen Induktivität des Elektromagneten (4); und Ermitteln (S7), aus der differentiellen Induktivität, einer Größe des Luftspalts (6). Die Erfindung betrifft außerdem ein Steuergerät (12).

## Beschreibung

Die Erfindung betrifft ein Verfahren zur Lagedetektion in einem elektromagnetischen Aktor mit einem variablen Luftspalt. Die Erfindung betrifft außerdem ein Steuergerät.

In herkömmlichen Aktoren wird eine Lagedetektion eines Ankers des Aktors mittels dedizierten Positionssensoren wie etwa Hall-Sensoren durchgeführt. Solche Lösungen sind allerdings kostenaufwendig. Des Weiteren kann eine mechanische Anordnung des Sensors relativ zum Anker des Aktors in vielen Anwendungen nicht möglich sein.

Verfahren zur sensorlosen Lagedetektion, d.h. ohne Positionssensor, sind ebenfalls bekannt, beispielsweise aus:
"A Sensorless Position Estimator for a Nonlinear Solenoid Actuator; M.F. Rahman, N.C. Cheung, K.W. Lim; School of Electrical Engineering, University of New South Wales, PO Box 1, Kensington, NSW 2052, Australia; DOI: 10.1109/IECON.1995.483969 (IEEE 1995, S. 1208)" beschreibt eine Auswertung eines Stromanstiegs in einzelnen PWM-Zyklen zur Ansteuerung eines Ventils für eine Bestimmung einer differentiellen Induktivität, und

"THE USE OF INHERENT SENSOR EFFECTS IN HYDRAULIC VALVES - A SIMPLE INSTRUMENTALITY APPROACH WITH MAGNETIC HYSTERESIS Dipl.-Ing. Nils Steker, Prof. Dr.-Ing. Hubertus Murrenhoff; The Fourteenth Scandinavian International Conference on Fluid Power, May 20-22, 2015, Tampere, Finland" beschreibt eine Endlagedetektion von magnetischen Aktoren mittels Berechnung einer Impedanz aus Spannung u(t) und Strom i(t) unter Nutzung eines Dithersignals.

Diese herkömmlichen sensorlosen Lösungen haben jedoch viele Nachteile. Zum einen bedarf es für diese Verfahren viel Rechenleistung und Speicherplatz auf einem Controller, auf welchem die Algorithmen laufen. Des Weiteren sind die Anforderungen an damit verknüpfte Messtechnik sehr hoch. Die Rechenleistung und Messtechnik sind allerdings applikationsabhängig und oftmals nicht real umsetzbar. Das vorgenannte Verfahren nach Rahman hat weiter den Nachteil, dass eine relative Größe des Stromanstiegs di/dt im Vergleich zum absoluten Strom i(t) klein ist. Damit tritt ein im Betrag großes Signalrauschen in di/dt auf. Des Weiteren wird eine Synchronisation der Messungen und eine Verarbeitung der daraus gewonnenen Daten bei höheren PWM-Frequenzen schwierig und mit hohen Aufwänden verbunden.

Außerdem muss bei vielen der vorgenannten sensorlosen Verfahren ein Anker des Aktors zur Erfassung dessen Lage bewegt werden, was beispielsweise bei einem mit dem Aktor verbundenen Ventil nachteilhaft sein kann.

Es ist Aufgabe der Erfindung, ein Verfahren zur Lagedetektion bereitzustellen, welches diese Nachteile überwindet. Insbesondere ist es Aufgabe der Erfindung, ein solches Verfahren bereitzustellen, welches mit einfacher und kostengünstiger Elektronik insbesondere des Aktors und/oder eines Steuergerätes für einen solchen Aktor, betrieben werden kann. Des Weiteren ist es eine Aufgabe der Erfindung, ein Steuergerät bereitzustellen, welches diese Nachteile überwindet und insbesondere mit wenig Speicherplatz und/oder Rechenleistung auskommt und kostengünstig hergestellt und betrieben werden kann.

Die Lösung dieser Aufgabe erfolgt durch die Merkmale der nebengeordneten Ansprüche. Die Unteransprüche haben vorteilhafte Ausgestaltungen der Erfindung zum Inhalt.

Die Lösung dieser Aufgabe erfolgt insbesondere durch die Merkmale des Verfahrens zur Lagedetektion in einem elektromagnetischen Aktor gemäß Anspruch 1. Der Aktor weist einen variablen Luftspalt auf. Vorzugsweise ist ein solcher Luftspalt zwischen einem (hub-)beweglichen Anker und einem Polkern gebildet und wird bei einem Hub des Ankers vergrößert oder verkleinert. Das Verfahren zur Lagedetektion weist die folgenden Schritte auf:
Eine Spannung wird an einem Elektromagneten des Aktors angelegt. Es werden ein erster Stromwert zu einem ersten Zeitpunkt und ein zweiter Stromwert zu einem zweiten Zeitpunkt in dem Elektromagneten erfasst. Aus dem ersten Stromwert und dem zweiten Stromwert wird eine Änderung des Stromes über die Zeit (auch nachfolgend "Stromänderung" oder "di/dt" bzw. invers als "dt/di" genannt) ermittelt. Ein dritter Stromwert wird zu einem dritten Zeitpunkt erfasst. Ein Widerstand des Elektromagneten wird ermittelt, wobei es sich hierbei um einen elektrischen Widerstand R handelt. Aus der angelegten Spannung und/oder eines erfassten Spannungswertes, der Stromänderung und des ermittelten Widerstandes wird eine differentielle Induktivität des Elektromagneten ermittelt. Aus der differentiellen Induktivität wird eine Größe des Luftspalts des Aktors ermittelt.

Durch das erfindungsgemäße Verfahren wird aus der differentiellen Induktivität die Größe des Luftspalts ermittelt, sodass daraus eine Lage eines Ankers des Aktors, insbesondere mit Bezug auf einen Polkern des Aktors, ermittelt wird.

Das erfindungsgemäße Verfahren wird insbesondere ohne Positionssensor, also "sensorlos" (im vorliegenden Sinne ohne Positionssensor), durchgeführt.

Die vorstehend genannten Schritte können grundsätzlich in jeglicher Reihenfolge durchgeführt werden, solange die für bestimmte Ermittlungen notwendigen Parameter wie etwa Stromwerte oder Spannungswerte vor und/oder während der entsprechenden Ermittlung erfasst werden. "Ermitteln" in diesem Sinne schließt insbesondere ein Berechnen sowie ein Vergleichen mit Look-Up-Tabellen ein. "Erfassen" in dem vorliegenden Sinne schließt insbesondere ein Einlesen von Werten bzw. Parametern sowie ein Auslesen eines entsprechenden Sensors oder von Messelektronik, beispielsweise in dem Aktor, ein.

Das Verfahren kann mehrmals hintereinander durchgeführt werden, was im vorliegenden Sinne als "Zyklen des Verfahrens" bezeichnet wird. Zwischen einzelnen oder mehreren Zyklen des Verfahrens kann ein Normalbetrieb des Aktors durchgeführt werden (bspw. Lagedetektion, Normalbetrieb, Lagedetektion,...,etc.).

Vor dem Schritt des Anlegens einer Spannung kann keine Spannung anliegen oder die für das Verfahren zur Lagedetektion angelegte Spannung unterscheidet sich von der zuvor anliegenden Spannung.

Grundsätzlich ist anzumerken, dass das Verfahren bevorzugt auch mehr als einen ersten Stromwert und einen zweiten Stromwert zu den entsprechenden Zeitpunkten erfassen kann. In diesem Sinne ist der "erste Stromwert" insbesondere als die erste Erfassung und der "zweite Stromwert" als die letzte Erfassung der Stromwerte für die Ermittlung der Stromänderung in einem Zyklus des Verfahrens zu verstehen. Beispielsweise umfasst das Verfahren mehrere Erfassungen des Stromwertes zu dem und um den ersten Zeitpunkt, welche daraufhin als erster Stromwert gemittelt werden. Dies ist bevorzugt auf die weiteren Erfassungen übertragbar. Mit anderen Worten können die Zeitpunkte, insbesondere je nach Abtastrate und/oder Taktfrequenz und/oder Auflösung, Zeitspannen sein, innerhalb welcher mehrere Erfassungen gemittelt werden, wobei die Zeitspannen (bspw. zum entsprechenden ersten Zeitpunkt und zum entsprechenden zweiten Zeitpunkt) zeitlich nicht überlappen und insbesondere jeweils nicht mehr als ±5% der gesamten Zeitspanne zwischen dem ersten Zeitpunkt und dem zweiten Zeitpunkt decken.

Die differentielle Induktivität L wird bevorzugt mittels der folgenden Gleichung ermittelt: $L = \left(u\left(t\right)-R*i\left(t\right)\right) * dt / di \left(t\right) .$

Darin ist L die differentielle Induktivität, u(t) ist die Spannung am Elektromagneten des Aktors, R ist der elektrische Widerstand des Elektromagneten, insbesondere einer Spule dessen, i(t) ist der (zeitabhängige) Strom durch den Elektromagneten und t ist die Zeit. Damit ist dt/di(t) das Inverse der Stromänderung di(t)/dt und wird im vorliegenden der Einfachheit halber "Stromänderung" genannt.

In bevorzugten Ausführungsformen ist die angelegte Spannung zumindest während des ersten und des zweiten Zeitpunktes im Wesentlichen konstant, insbesondere im Mittel im Wesentlichen konstant. Mit anderen Worten wird zumindest während des ersten und zweiten Zeitpunktes eine im Wesentlichen konstante Spannung angelegt. Im vorliegenden Sinne bedeutet "im Wesentlichen konstant", dass eine Abweichung vom Mittelwert maximal +-5% des Mittelwertes entspricht. Besonders bevorzugt ist die angelegte Spannung bis zum und während des dritten Zeitpunkts im Wesentlichen konstant.

In manchen Anwendungen ist eine am Elektromagneten anliegende Spannung U ein Rechtecksignal, bei welchem bevorzugt ein Mittelwert konstant ist. Bevorzugt wird die erfasste Spannung u(t) geglättet. Dies hat den Vorteil, dass in der vorstehenden Gleichung 1 u(t) = const. = U und damit leicht bestimmt werden kann, wodurch die erforderliche Rechenleistung zur Implementierung des Verfahrens verringert wird. Beispielsweise kann dabei auf eine zyklische Erfassung des Spannungswertes verzichtet werden.

Bevorzugt werden bei der Ermittlung der Stromänderung dt als eine erste Zeitspanne zwischen dem ersten Zeitpunkt und dem zweiten Zeitpunkt und di als die Differenz zwischen dem zweiten Stromwert und dem ersten Stromwert genähert. Damit lässt sich eine erforderliche Rechenleistung weiter reduzieren. In dem vorstehend erläuterten Sinne, wonach mehr als die zwei Stromwerte zur Ermittlung der Stromänderung erfasst werden können, wird bevorzugt die Stromänderung (Zeitspannen und Stromwerte) ebenfalls bevorzugt gemittelt und als Stromänderung erfasst.

In bevorzugten Ausführungsformen wird die Erfassung des ersten Stromwertes und des zweiten Stromwertes nach einer vordefinierten Einschwingzeit nach Beginn des Anlegens der Spannung durchgeführt. Bevorzugt betrifft die Einschwingzeit ein Einschwingen eines Tiefpassfilters, welcher die erfasste Spannung am Aktor glättet, sodass lediglich ein DC-Signal erfasst werden kann. Dies hat den Vorteil, dass insbesondere die Spannung, bevorzugt der Mittelwert der Spannung, am Elektromagneten u(t) konstant ist und damit leicht bestimmt werden kann.

Die vorstehend erläuterte vordefinierte Einschwingzeit kann bei der Herstellung des Aktors bzw. des Filters erfasst werden. Alternativ kann im vorliegenden Verfahren die Spannung am Elektromagneten mehrmals erfasst werden und bei Unterschreiten eines Schwellwerts für die Änderung der erfassten Spannung du(t)/dt als "eingeschwungen" gesetzt werden. Vorteilhafterweise wird in dem vorliegenden Verfahren eine Spannungserfassung lediglich zur Bestimmung des Widerstandes und/oder der differentiellen Induktivität verwendet.

Vorzugsweise ist der dritte Zeitpunkt, zu welchem der dritte Stromwert ermittelt wird, ein vordefinierter oder ermittelter Zeitpunkt, an dem der Strom durch den Elektromagneten im Wesentlichen konstant ist. Dadurch, dass der Strom während der Erfassung des dritten Stromwertes, also zum dritten Zeitpunkt, konstant ist (also die Stromänderung di(t)/dt nahezu 0 ist), ist eine im Elektromagneten induzierte Spannung gleich Null, sodass der elektrische Widerstand auf einfache Weise und mit minimaler Rechenleistung ermittelt werden kann. Insbesondere weist hierbei der ermittelte Widerstand nur einen geringen Fehler durch z.B. induzierte Spannungen auf.

In bevorzugten Ausführungsformen wird ein Schritt der Stromregelung des Elektromagneten nach dem zweiten Zeitpunkt, insbesondere unmittelbar nach dem zweiten Zeitpunkt und/oder zumindest bis zum dritten Zeitpunkt, durchgeführt. Hierbei wird bevorzugt eine Stromregelung für den Normalbetrieb des Aktors eingesetzt. Alternativ oder zusätzlich dazu kann die Stromregelung den Strom des Aktors auf einen im Wesentlichen konstanten Wert regeln.

Bevorzugt wird bei dem erfindungsgemäßen Verfahren zur Lagedetektion, insbesondere während der gesamten vorstehend erläuterten Stromregelung außerhalb des Normalbetriebs oder während des gesamten Verfahrens zur Lagedetektion, der Anker des Aktors im Wesentlichen nicht bewegt. Beispielsweise wird hierbei eine Stromregelung gewählt, bei welcher der Anker nicht gegen eine Federkraft (oder jegliche andere Kraft einer mit dem Aktor verbundenen Last, oder der Trägheit des Ankers) eines Ventils bewegt werden kann, also die Kraft des Aktors geringer als die Federkraft ist. Bevorzugt wird der Anker nur im Normalbetrieb wesentlich bewegt. Dadurch wird gewährleistet, dass die Lagedetektion ohne aktiven Eingriff in den Normalbetrieb, beispielsweise dem Öffnen eines Ventils, durchgeführt werden kann.

Bevorzugt wird die vorgenannte Stromregelung während und/oder nach dem zweiten Zeitpunkt, also während und/oder nach der Erfassung des zweiten Stromwertes, durchgeführt. Dabei ist der erfasste zweite Stromwert ein Sollwert für die Stromregelung. Vorstehend wurde erläutert, dass der dritte Stromwert erfasst wird, wenn der Strom im Elektromagneten im Wesentlichen konstant ist. Bei der Stromregelung wird alternativ oder zusätzlich dazu der Stromwert durch die Stromregelung festgelegt, sodass eine Gesamtdauer des Verfahrens zur Lagedetektion verringert werden kann und der Normalbetrieb im Anschluss früher durchgeführt werden kann.

In manchen bevorzugten Ausführungsformen wird der Widerstand, also der elektrische Widerstand R, des Elektromagneten aus dem dritten Stromwert und der angelegten Spannung U und/oder eines erfassten Spannungswertes u(t) ermittelt, gemäß U = R * I. Hierdurch wird eine einfache Ermittlung der differentiellen Induktivität L mit geringer Rechenleistung ermöglicht.

Bevorzugt wird der Widerstand des Elektromagneten aus dem dritten Stromwert und dem erfassten Spannungswert ermittelt, wobei der erfasste Spannungswert nach der vordefinierten Einschwingzeit erfasst wird.

Besonders bevorzugt wird die Größe des Luftspalts aus der differentiellen Induktivität mittels eines Look-Up-Tables ermittelt, in welchem Luftspaltgrößen mit differentiellen Induktivität verglichen sind.

Durch die vorstehend erläuterten Ausführungsformen wird ein Verfahren zur Lagedetektion bereitgestellt, welches besonderes geringe Anforderungen an die Rechenleistung und Speicherkapazität stellt. Des Weiteren lässt sich mittels des vorstehenden Verfahrens die Lage des Ankers im Stillstand eines mit Aktor verbundenen Ventils ermitteln.

Die vorliegende Erfindung betrifft außerdem ein Steuergerät. Das Steuergerät ist mit einem Aktor bzw. dem vorgenannten Aktor verbindbar. Das Steuergerät weist ferne eine Recheneinheit wie etwa eine CPU, GPU, etc. auf, welche zum Durchführen des Verfahrens gemäß den vorstehenden Erläuterungen eingerichtet ist.

Das Steuergerät ist insbesondere derart mit dem Aktor verbindbar, dass die vorgenannten Parameter wie etwa Strom und Spannung aus dem Aktor ausgelesen werden können. Hierbei wird bevorzugt eine Taktfrequenz bzw. ein Taktsignal des Steuergeräts zur Bestimmung der Zeitpunkte verwendet. Das Steuergerät ist darüber hinaus bevorzugt eingerichtet, den Aktor mittels Pulsweitenmodulation (PWM) zu betreiben.

Das Steuergerät ist in bevorzugten Ausführungen ein Mikrocontroller einer im Aktor integrierten Elektronik, welche mit dem Aktor verbunden ist. Alternativ oder zusätzlich dazu ist das Steuergerät separat vom Aktor und mit diesem zumindest zeitweise verbindbar.

Die vorliegende Erfindung betrifft außerdem eine Aktoreinheit, welche den Aktor und das mit dem Aktor verbundene Steuergerät aufweist. Die Aktoreinheit weist insbesondere ein mit dem Aktor verbundenes und durch den Aktor gesteuertes Ventil auf.

Weitere Einzelheiten, Vorteile und Merkmale der vorliegenden Erfindung ergeben sich aus nachfolgender Beschreibung von Ausführungsbeispielen anhand der Zeichnung. Es zeigt:
Fig. 1 eine schematische Schnittansicht einer erfindungsgemäßen Aktoreinheit zur Erläuterung eines Verfahrens zur Lagedetektion;
Fig. 2 ein schematisches Diagramm zur Erläuterung eines Verfahrens zur Lagedetektion gemäß einer ersten Ausführungsform der vorliegenden Erfindung;
Fig. 3 ein Blockdiagramm zur Erläuterung des Verfahrens zur Lagedetektion gemäß der ersten Ausführungsform der vorliegenden Erfindung;
Fig. 4 ein schematisches Diagramm zur Erläuterung eines Verfahrens zur Lagedetektion gemäß einer zweiten Ausführungsform der vorliegenden Erfindung; und
Fig. 5 ein Blockdiagramm zur Erläuterung des Verfahrens zur Lagedetektion gemäß der zweiten Ausführungsform der vorliegenden Erfindung.

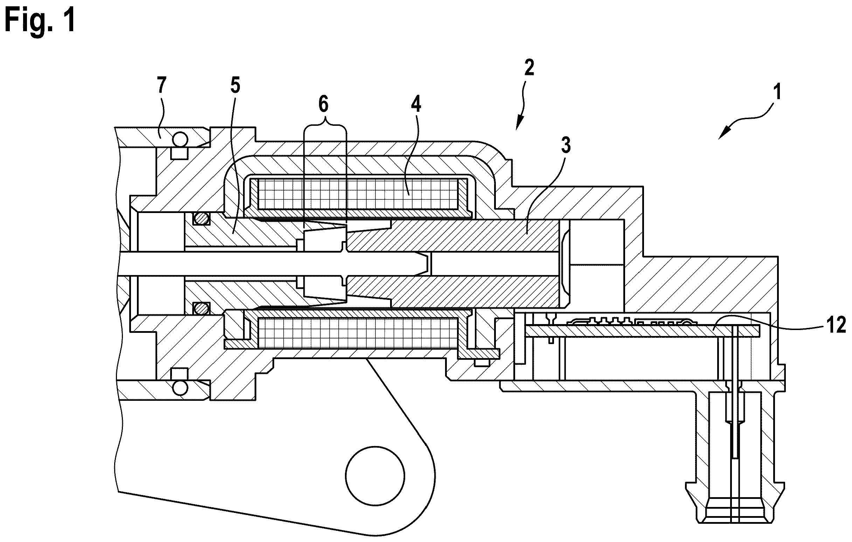

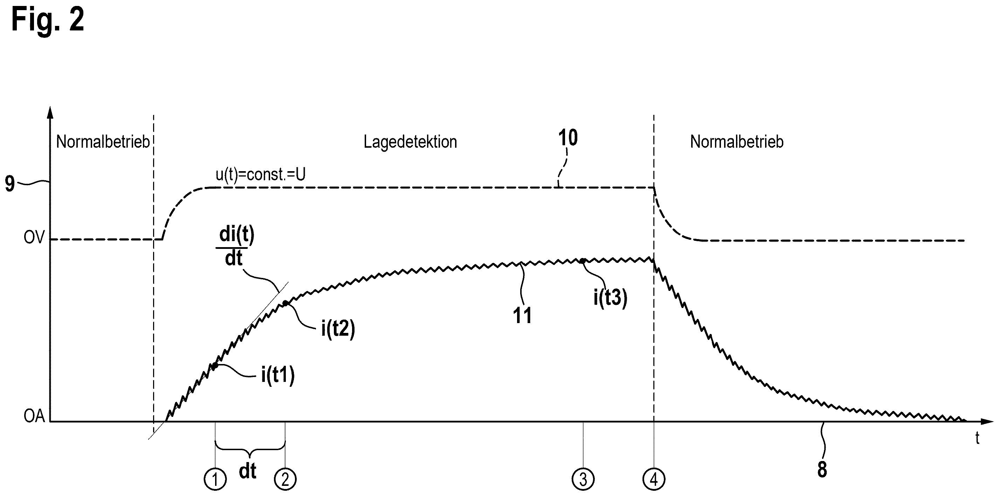

Fig. 1 zeigt eine schematische Schnittansicht einer erfindungsgemäßen Aktoreinheit 1 zur Erläuterung eines Verfahrens zur Lagedetektion, wobei das Verfahren nachstehend mit Bezug auf die Figuren 2 bis 5 erläutert wird.

Die Aktoreinheit 1 weist einen Aktor 2 und ein Steuergerät 12 auf. Das Steuergerät 12 ist im vorliegenden Fall als integral mit dem Aktor 2 gebildete Platine aufweisend eine Recheneinheit wie etwa eine CPU, GPU, etc (nicht dargestellt). In manchen alternativen Ausführungen kann jedoch das Steuergerät 12 separat zum Aktor 2 und mit dem Aktor 2 verbindbar ausgestaltet sein. In Fig. 1 ist außerdem ein Teil eines Ventils 7 angedeutet, welches mit dem Aktor 2 verbunden ist und durch diesen gesteuert wird. Das Ventil 7 ist insbesondere Teil der Aktoreinheit 1. Das Ventil 7 ist hierbei lediglich ein Beispiel für eine mit dem Aktor 2 verbundene Vorrichtung und kann alternativ oder zusätzlich dazu beispielsweise eine Pumpe oder eine sonstige zu aktuierende Vorrichtungen sein.

Der Aktor 2 weist einen Anker 3 auf, welche hubbeweglich aufgenommen ist. Der Anker 3 wird mittels eines Elektromagneten 4, insbesondere Bestromung einer Spule des Elektromagneten 4, in Richtung eines Polkerns 5 bewegt. Zwischen dem Polkern 5 und dem Aktor 3 ist somit ein variabler Luftspalt 6 gebildet.

Durch eine Bestimmung einer Größe des Luftspalts 6 lässt sich eine Position des Ankers 3 bestimmen. Dies wird im Folgenden als "Lagedetektion" bezeichnet.

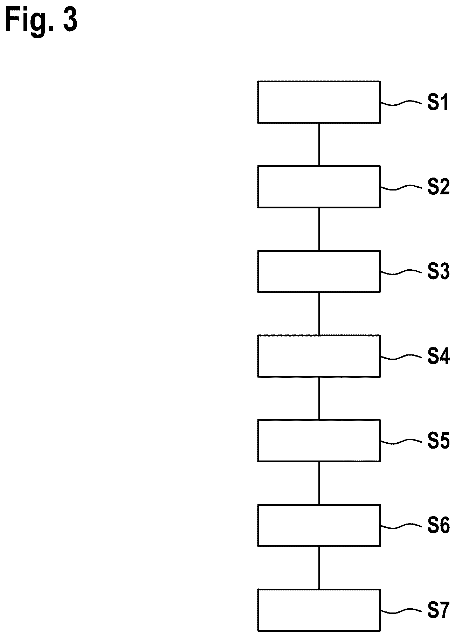

Im Folgenden wird ein erfindungsgemäßes Verfahren zur Lagedetektion in einem elektromagnetischen Aktor 2 mit einem variablen Luftspalt 6 anhand der Figur 2 und der Figur 3 beschrieben. Das Verfahren wird durch das Steuergerät 12 durchgeführt.

Fig. 2 zeigt ein schematisches Diagramm zur Erläuterung eines Verfahrens zur Lagedetektion gemäß einer ersten Ausführungsform der vorliegenden Erfindung, während Fig. 3 ein Blockdiagramm zu dem vorliegenden Verfahren zeigt. Dabei ist eine Abszisse 8 Zeit t, während eine Ordinate 9 Spannung in Volt (gestrichelte Linie 10) einerseits und Strom in Ampere (durchgehende Linie 11) andererseits zeigt.

Die gestrichelte Linie 10 repräsentiert hierbei eine an den Elektromagneten 4 des Aktors 2 erfasste und geglättete Spannung u(t). In den nachstehenden Erläuterungen ist die Spannung u(t) die tatsächlich am Elektromagneten 4 erfassbare bzw. erfasste und geglättete Spannung u(t).

Die durchgehende Linie 11 repräsentiert hierbei einen Laststrom i(t), welcher durch den Elektromagneten 4 des Aktors 2 fließt.

Mehrere Zahlen 1 - 4 sind außerdem umkringelt dargestellt. Diese kennzeichnen verschiedene Zeitpunkte t1 - t4, welche nachstehend erläutert werden.

Grundsätzlich wird der Aktor 2 in einem Normalbetrieb betrieben. Dabei wird der Anker 3 wie vorstehend erläutert mittels Bestromung des Elektromagneten 4 bewegt, um eine Betätigung beispielsweise eines Ventils 7 zu steuern. Der Aktor 2 wird dabei im Normalbetrieb (wenn keine Lagedetektion durchgeführt wird) stromgeregelt betrieben. Dies bedeutet, dass der Strom i(t) durch den Elektromagneten 4 durch einen Regelalgorithmus geregelt wird. Dies wird vorliegend mittels Pulsweitenmodulation (PWM) durchgeführt.

Es ist jedoch im Allgemeinen erwünscht, eine Lage des Aktors 2 bzw. des Ankers 3 zu bestimmen, um eine Diagnose des Aktors 2 durchzuführen. Hierfür wird, wie in Fig. 2 oben dargestellt, eine Lagedetektion gemäß der vorliegenden Erfindung durchgeführt.

Das Verfahren zur Lagedetektion beruht auf eine differentielle Induktivität L, welche in Ihrer Größe von der Größe des Luftspalts 6 abhängt. Die differentielle Induktivität L lässt sich gemäß folgender Gleichung berechnen: $L = \left(u\left(t\right)-R*i\left(t\right)\right) * dt / di \left(t\right) .$

Darin ist L die differentielle Induktivität, u(t) ist die Spannung am Elektromagneten 4 des Aktors 2, R ist der elektrische Widerstand des Elektromagneten 4, insbesondere der Spule dessen, i(t) ist der (zeitabhängige) Strom durch den Elektromagneten 4 und t ist die Zeit. Damit ist dt/di(t) das Inverse der Stromänderung di(t)/dt und wird im vorliegenden der Einfachheit halber "Stromänderung" genannt.

Das Verfahren zur Lagedetektion enthält die folgenden Schritte, wobei die Schritte in einer bevorzugten Reihenfolge genannt werden, aber auch verschiedene Reihenfolgen denkbar sind:
In einem ersten Schritt S1 wird eine Spannung U an dem Elektromagneten 4 des Aktors 2 angelegt beziehungsweise zugeführt. In manchen Anwendungen ist die vom Steuergerät 12 zugeführte Spannung U eine im Mittelwert konstante Rechteckspannung. Die Spannung U während der Lagedetektion ist insbesondere ein Spannungswert, welcher sich von der zu einem Zeitpunkt vor oder nach dem Verfahren angelegten Spannung unterscheidet.

Wie aus Fig. 2 ersichtlich wird eine im Mittel konstante Spannung U am Elektromagneten 4 angelegt, sodass die am Elektromagneten 4 anliegende Spannung u(t) = const. = U ist (siehe konstanten Bereich der gestrichelten Linie 10).

Nach Beginn des Anlegens der Spannung U wird eine vordefinierbare Einschwingzeit bis zum ersten Zeitpunkt t1 abgewartet. Dabei ist anzumerken, dass die erfasste Spannung U mittels eines Tiefpassfilters (nicht dargestellt) geglättet wird um diese zu erfassen und dieser Tiefpassfilter sich einschwingt, bis die am Elektromagneten 4 erfasste Spannung u(t) konstant ist (siehe steigende gestrichelte Linie 10 bis zum konstanten Verlauf). Dies hat den Vorteil, dass u(t) daraufhin konstant ist, sodass angenommen werden kann, dass u(t) = U ist.

In einem zweiten Schritt S2 werden zum ersten Zeitpunkt t1 und zu einem zweiten Zeitpunkt t2 ein erster Stromwert i(t1) und ein zweiter Stromwert i(t2) entsprechend am Elektromagneten 4 erfasst. Der erste Zeitpunkt t1 ist nach dem vorgenannten Einschwingen.

In einem dritten Schritt S3 wird aus dem ersten Stromwert i(t1) und aus dem zweiten Stromwert i(t2) eine Änderung des Stroms i(t) mit der Zeit als di(t)/dt ermittelt. In der vorliegenden Ausführungsform wird dabei die differentielle Stromänderung di(t)/dt als (i(t2) - i(t1)) / (t2 - t1) angenähert. Zur Erhöhung der Genauigkeit einer solchen Annäherung ist es möglich, mehr als den ersten und zweiten Stromwert an mehreren Zeitpunkten zu erfassen, wobei im Folgenden der Einfachheit halber nur von einem ersten und einem zweiten Stromwert ausgegangen wird.

Hierbei ist vorteilhaft, dass der Wert di(t) möglichst groß, insbesondere maximiert, wird, um Rauschen/Ungenauigkeiten aufgrund der Differentiation zu vermeiden. Dies wird durch Maximieren von dt erreicht.

Nun fehlt aus obiger Gleichung 1 der elektrische Widerstand R und der Stromwert i(t).

Hierzu wird in einem vierten Schritt zu einem dritten Zeitpunkt t3 ein dritter Stromwert i(t3) ermittelt. Wie aus Fig. 2 ersichtlich ist der dritte Zeitpunkt t3 zu einer Zeit, in welcher der Strom (durchgehende Linie 11) im Wesentlichen konstant ist, also di/dt ≈ 0, sodass eine induzierte Spannung des Elektromagneten 4 nahezu null ist. Hierbei wird außerdem die am Elektromagneten 4 angelegte Spannung u(t3) gleichzeitig erfasst. Alternativ kann die Spannung bevorzugt bereits zum ersten Zeitpunkt t1 erfasst werden, da sich die Spannung während des Verfahrens kaum oder nicht verändert.

Der dritte Zeitpunkt t3 kann vorbestimmt sein. Alternativ oder zusätzlich dazu kann der Strom kontinuierlich erfasst und di/dt mit einem Schwellwert verglichen werden, sodass der dritte Zeitpunkt t3 ein Zeitpunkt ist, an welchem di/dt geringer als der Schwellwert ist.

In einem fünften Schritt S5 wird sodann der elektrische Widerstand R aus dem vorgenannten dritten Stromwert i(t3) und der an dem Elektromagneten 4 angelegten Spannung u(t3) ermittelt.

Aus den vorgenannten ermittelten Größen wird in einem sechsten Schritt S6 die differentielle Induktivität L gemäß obiger Gleichung 1 ermittelt. Genauer gesagt wird dabei aus der angelegten Spannung U bzw. des erfassten Spannungswertes u(t), der Stromänderung di/dt (bzw. der inversen Stromänderung dt/di gemäß obiger Gleichung 1) und des ermittelten Widerstands R die differentielle Induktivität L ermittelt. Für den Wert "i(t)" kann einer der erfassten Ströme, beispielsweise i(t1), oder ein Mittelwert aus verschiedenen erfassten Strömen verwendet werden. Da der Stromwert i(t) aus obiger Formel lediglich einen Skalierungsfaktor darstellt, kann jeder der bereits erfassten Stromwerte, beispielsweise i(t1), i(t2), etc., hierfür verwendet werden.

Die differentielle Induktivität L hängt im Allgemeinen, bei geringen Strömen linear, von der Luftspaltgröße ab, sodass aus diesem Wert in einem siebten Schritt S7 insbesondere mittels Look-Up-Table oder einfacher Berechnung die Lage des Ankers 2 erkannt werden kann.

Beim vorstehend erläuterten Verfahren wird insbesondere der Anker 3 nicht bewegt, der Aktor 2 bzw. die damit verbundene Last (bspw. Ventil 7) nicht betätigt. Dadurch kann die vorliegende Lagedetektion durchgeführt werden, ohne den Aktor 2 beispielsweise von der damit verbundenen Last zu trennen.

Hierfür kann beispielsweise ein Schwellwert für die Spannungs- und Stromwerte verwendet werden, unterhalb dessen der Anker 3 nicht bewegt wird.

Die Zeitspanne zwischen dem Beginn des Anlegens der Spannung im ersten Schritt und dem ersten Zeitpunkt t1 der Stromerfassung ist im Allgemeinen abhängig von physikalischen Eigenschaften der Elektronik, insbesondere des Filters.

Der zweite Zeitpunkt t2 ist bevorzugt derart gewählt, dass eine Stromänderung i(t2) - i(t1) möglichst groß ist, um ein Rauschen des Signals di/dt zu verringern. Die Zeitspanne zwischen diesen Zeitpunkten ist im Allgemeinen abhängig von den physikalischen Eigenschaften eines Eisenkreises des Elektromagneten 4 und/oder der Anwendung des Aktors 2 und ist bevorzugt vorbestimmt.

Wie aus Fig. 2 außerdem ersichtlich, wird nach der Lagedetektion zum Zeitpunkt t4 wieder der Normalbetrieb durchgeführt, wobei der Normalbetrieb insbesondere anhand der ermittelten Lageinformationen über den Aktor 2 durchgeführt wird. Dabei wird bevorzugt die ermittelte Lageinformation mit einer Soll-Position des Aktors 2 als Diagnose verglichen. Sofern die erfasste Lage nicht der Soll-Position entspricht, kann ein sicherer Zustand des Aktors 2 eingenommen werden, insbesondere der Aktor 2 ausgeschalten werden.

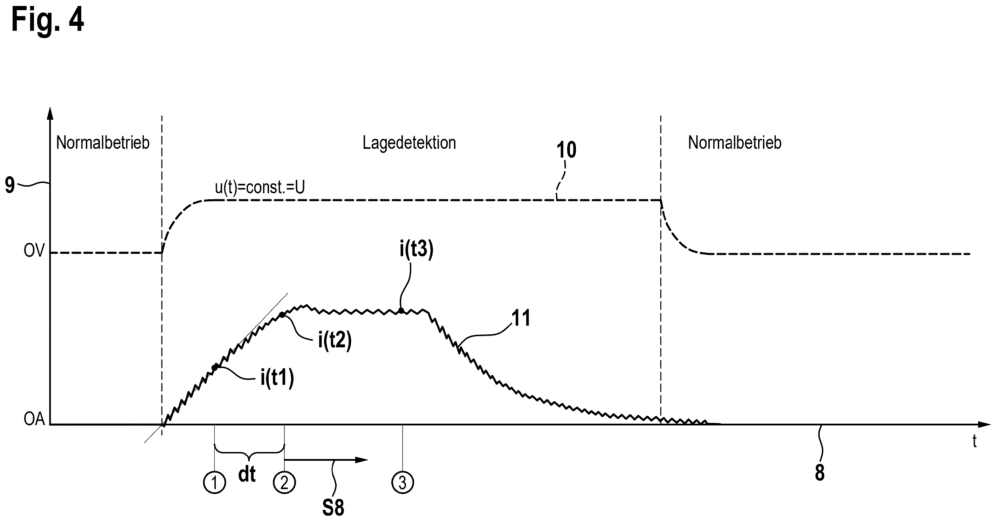

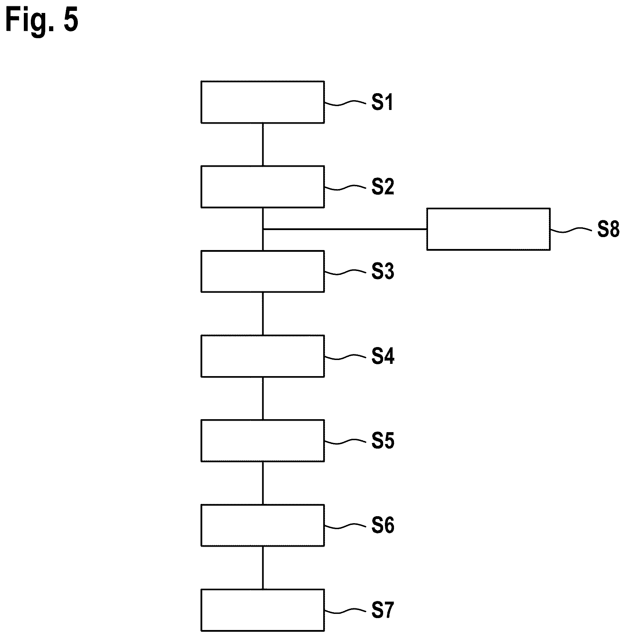

Nachfolgend wird eine zweite Ausführungsform des Verfahrens zur Lagedetektion gemäß der vorliegenden Erfindung anhand der Figuren 4 und 5 erläutert. Es werden hauptsächlich die Unterschiede zum Verfahren gemäß der ersten Ausführungsform beschrieben und sich wiederholende Beschreibungen werden weggelassen.

In der vorliegenden Ausführungsform wird eine Zeit bis zur Erfassung des dritten Stromwertes i(t3) im Vergleich zur ersten Ausführungsform vorteilhafterweise verkürzt, sodass insgesamt eine Zeitdauer der Lagedetektion verringert wird.

Hierfür wird in der vorliegenden Ausführungsform während und/oder nach dem zweiten Schritt S2 ein achter Schritt S8 durchgeführt. Hierbei wird während und/oder nach dem zweiten Zeitpunkt t2 eine Stromregelung als achter Schritt S8 durchgeführt.

Als Sollwert für die Stromregelung wird der in dem zweiten Schritte erfasste zweite Stromwert i(t2) verwendet. Dieser Strom fließt bereits durch den Elektromagneten 4, sodass eine Zeit bis zum dritten Zeitpunkt t3, an welchem der Strom nahezu konstant (di/dt ≈ 0) ist, reduziert ist. Dadurch lässt sich der Widerstand R schneller bzw. früher ermitteln, sodass die Gesamtzeit für die Lagedetektion verringert ist.

Des Weiteren entspricht ein Betrag des während der Endlagendetektion maximal fließenden Stroms durch den Elektromagneten 4 |i(t2)|. Es wird kein höherer oder niedrigerer Strom eingeprägt.

Im Normalbetrieb des Aktors 2, insbesondere falls vor der Endlagendetektion ein Storm eingeregelt war, kann außerdem der Widerstand R anhand des zuvor eingeregelten Stromes und der Spannung bestimmt werden. Alternativ kann eine dedizierte Phase zur Widerstandsbestimmung vor der Erfassung des ersten Stromwertes i(t1) implementiert werden.

Des Weiteren kann der Widerstand R durch Ermitteln eines Mittelwertes von Widerstandswerten ermittelt werden, welche jeweils um den dritten Zeitpunkt t3 und des Widerstandes R, der anhand des zuvor eingeregelten Stromes und der Spannung bestimmt wurde, ermittelt werden.

Insbesondere vorteilhaft ist, dass mittels des erfindungsgemäßen Verfahrens genau und ohne hohe Rechenleistung Endlagen des Ankers 3 detektiert werden können. Zusätzlich dazu kann ein Klemmen des Ankers 3 in einer Zwischenposition, die keiner der Endlagen entspricht, detektiert werden. Hierbei ist weiter vorteilhaft, dass der Anker 3 nicht bewegt werden muss und dass die Lagedetektion sensorlos geschieht.

Neben der vorstehenden schriftlichen Beschreibung der Erfindung wird zu deren ergänzender Offenbarung hiermit explizit auf die zeichnerische Darstellung der Erfindung in den Figuren Bezug genommen.

### Bezugszeichenliste

- 1: Aktoreinheit
- 2: Aktor
- 3: Anker
- 4: Elektromagnet
- 5: Polkern
- 6: Luftspalt
- 7: Ventil
- 8: Abszisse
- 9: Ordinate
- 10: Spannung (gestrichelte Linie)
- 11: Strom (durchgehende Linie)
- 12: Steuergerät

## Patentansprüche

1. Verfahren zur Lagedetektion in einem elektromagnetischen Aktor (2) mit einem Luftspalt (6), aufweisend die Schritte:
- Anlegen einer Spannung (S1) an einem Elektromagneten (4) des Aktors (2);
- Erfassen (S2) eines ersten Stromwertes (i(t1)) zu einem ersten Zeitpunkt (t1) und eines zweiten Stromwertes (i(t2)) zu einem zweiten Zeitpunkt (t2) in dem Elektromagneten (4);
- Ermitteln (S3), aus dem ersten Stromwert (i(t1)) und dem zweiten Stromwert (i(t2)), einer Änderung (di/dt) des Stromes (di) über die Zeit (dt);
- Erfassen (S4) eines dritten Stromwertes (i(t3)) zu einem dritten Zeitpunkt (t3);
- Ermitteln (S5) eines Widerstandes des Elektromagneten (4);
- Ermitteln (S6), aus der angelegten Spannung und/oder eines erfassten Spannungswertes, der Stromänderung (di/dt) und des Widerstandes, einer differentiellen Induktivität des Elektromagneten (4); und
- Ermitteln (S7), aus der differentiellen Induktivität, einer Größe des Luftspalts (6).

2. Verfahren zur Lagedetektion nach Anspruch 1, wobei die angelegte (S1) Spannung zumindest während des ersten Zeitpunktes (t1) und des zweiten Zeitpunktes (t2) im Wesentlichen konstant ist, insbesondere im Mittel im Wesentlichen konstant ist.

3. Verfahren zur Lagedetektion nach einem der vorherigen Ansprüche, wobei bei der Ermittlung (S3) der Stromänderung dt als eine erste Zeitspanne zwischen dem ersten Zeitpunkt (t1) und dem zweiten Zeitpunkt (t2) und di als die Differenz zwischen dem zweiten Stromwert (i(t2)) und dem ersten Stromwert (i(t1)) genähert werden.

4. Verfahren zur Lagedetektion nach einem der vorherigen Ansprüche, wobei die Erfassung (S2) des ersten Stromwertes (i(t1)) und des zweiten Stromwertes (i(t2)) nach einer vordefinierten Einschwingzeit nach Beginn des Anlegens der Spannung (S1) durchgeführt wird.

5. Verfahren zur Lagedetektion nach einem der vorherigen Ansprüche, wobei der dritte Zeitpunkt (t3) ein vordefinierter oder ermittelter Zeitpunkt ist, an dem der Strom durch den Elektromagneten (4) im Wesentlichen konstant ist.

6. Verfahren zur Lagedetektion nach einem der vorherigen Ansprüche, wobei nach dem ersten Zeitpunkt (t1), insbesondere nach und/oder während des zweiten Zeitpunktes (t2), ein Schritt (S8) einer Stromregelung des Elektromagneten (4) durchgeführt wird.

7. Verfahren zur Lagedetektion nach Anspruch 6, wobei die Stromregelung (S8) während und/oder nach dem zweiten Zeitpunkt (t2) durchgeführt wird und der zweite Stromwert (i(t2)) ein Sollwert für die Stromregelung (S8) ist.

8. Verfahren zur Lagedetektion nach einem der vorherigen Ansprüche, wobei der Widerstand des Elektromagneten (4) aus dem dritten Stromwert (i(t3)) und der angelegten Spannung und/oder eines erfassten Spannungswertes (u(t)) in dem Elektromagneten (4) ermittelt wird (S5).

9. Verfahren zur Lagedetektion nach Anspruch 8 mit Anspruch 4, wobei der Widerstand des Elektromagneten (4) aus dem dritten Stromwert (i(t3)) und des erfassten Spannungswertes (u(t)) ermittelt wird, wobei der erfasste Spannungswert (u(t)) nach der vordefinierten Einschwingzeit erfasst wird.

10. Steuergerät (12), welches mit einem Aktor (2) verbindbar ist und eine Recheneinheit aufweist, welche zum Durchführen des Verfahrens gemäß einem der Ansprüche eingerichtet ist.
